(19)

**Europäisches Patentamt**
**European Patent Office**
**Office européen des brevets**

(11)  **EP 3 592 074 B1**

(12)  # EUROPEAN PATENT SPECIFICATION

(45) Date of publication and mention
of the grant of the patent:
**28.07.2021 Bulletin 2021/30**

(21) Application number: **18772043.8**

(22) Date of filing: **23.03.2018**

(51) Int Cl.:
*H04W 72/04* (2009.01)     *H04L 5/00* (2006.01)

(86) International application number:
**PCT/CN2018/080323**

(87) International publication number:
**WO 2018/171748 (27.09.2018 Gazette 2018/39)**

(54)  **RESOURCE MAPPING METHOD AND APPARATUS THEREOF**

RESSOURCENABBILDUNGSVERFAHREN UND VORRICHTUNG DAFÜR

PROCÉDÉ DE MAPPAGE DE RESSOURCES ET APPAREIL ASSOCIÉ

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **24.03.2017 CN 201710184760**

(43) Date of publication of application:
**08.01.2020 Bulletin 2020/02**

(73) Proprietor: **Huawei Technologies Co., Ltd.
Longgang District
Shenzhen, Guangdong 518129 (CN)**

(72) Inventors:
• **LUO, Hejia
Shenzhen
Guangdong 518129 (CN)**
• **HUANGFU, Yourui
Shenzhen
Guangdong 518129 (CN)**
• **CHEN, Ying
Shenzhen
Guangdong 518129 (CN)**
• **DAI, Shengchen
Shenzhen
Guangdong 518129 (CN)**
• **LI, Rong
Shenzhen
Guangdong 518129 (CN)**

(74) Representative: **Thun, Clemens
Mitscherlich PartmbB
Patent- und Rechtsanwälte
Sonnenstraße 33
80331 München (DE)**

(56) References cited:
**CN-A- 103 444 119     CN-A- 106 160 974
US-A1- 2012 063 350**

• HUAWEI ET AL: "Nested structure for search
space design", 3GPP DRAFT; R1-1701639, 3RD
GENERATION PARTNERSHIP PROJECT (3GPP),
MOBILE COMPETENCE CENTRE ; 650, ROUTE
DES LUCIOLES ; F-06921 SOPHIA-ANTIPOLIS
CEDEX ; FRANCE , vol. RAN WG1, no. Athens,
Greece; 20170213 - 20170217 12 February 2017
(2017-02-12), XP051208806, Retrieved from the
Internet:
URL:http://www.3gpp.org/ftp/Meetings_3GPP_
SYNC/RAN1/Docs/ [retrieved on 2017-02-12]
• NEC: "Control Channel Structure For NR", 3GPP
TSG-RAN WG1 Meeting #87 R1-1701883, 17
February 2017 (2017-02-17), XP051209046,
• HUAWEI: "On Repetition Level Adjustment After
Initial Access", 3GPP TSG RAN WG1 Meeting #83
R1-156933, 22 November 2015 (2015-11-22),
XP051003276,
• HUAWEI ET AL: "Polar Code Construction for
NR", 3GPP DRAFT; R1-1608862 POLAR CODE
CONSTUCTION FOR NR, 3RD GENERATION
PARTNERSHIP PROJECT (3GPP), MOBILE
COMPETENCE CENTRE ; 650, ROUTE DES
LUCIOLES ; F-06921 SOPHIA-ANTIPOLIS
CEDEX ; FRANCE , vol. RAN WG1, no. Lisbon,
Portugal; 20161010 - 20161014 9 October 2016
(2016-10-09), XP051148916, Retrieved from the
Internet:
URL:http://www.3gpp.org/ftp/Meetings_3GPP_
SYNC/RAN1/Docs/ [retrieved on 2016-10-09]

## Description

### TECHNICAL FIELD

This application relates to the field of communications technologies, and in particular, to a resource mapping method and an apparatus thereof.

### BACKGROUND

Currently, in a wireless communication protocol, a coding scheme of new radio (English: New Radio, NR for short) downlink control information (English: Downlink Control Information, DCI for short) has been determined as a polar (Polar) code. A nested structure (English: nested structure) is proposed in an NR physical downlink control channel (English: Physical Downlink Control Channel, PDCCH for short). The nested structure features that a same resource element (English: Resource Element, RE for short) appears at different aggregation levels (English: Aggregation Level, AL for short). Quantities of candidate locations (English: candidate locations) included at different aggregation levels are different.

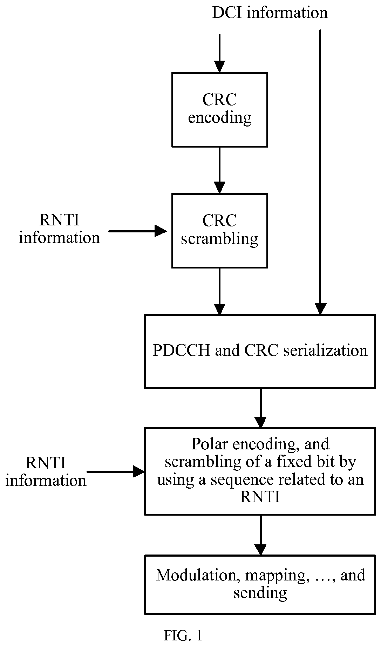

Currently, a PDCCH blind detection solution based on the polar code is proposed. For a sending procedure of the solution, refer to FIG 1. The base station first performs cyclical redundancy check (English: Cyclical Redundancy Check, CRC for short) coding on to-be-sent DCI, to obtain a CRC sequence, and then scrambles a frozen bit (English: frozen bit)/a parity check frozen bit (English: Parity Check frozen, PC frozen for short) in the CRC sequence by using a sequence related to a radio network temporary identifier (English: Radio Network Temporary Identifier, RNTI for short), to obtain the RNTI-scrambled CRC sequence. The sequence related to the RNTI may be a simple copy of the RNTI, or may be a function of the RNTI, for example, a random sequence generated by using the RNTI as a seed. Then, the base station serializes the RNTI-scrambled CRC sequence to the foregoing DCI, to obtain the serialized sequence, and then successively performs channel encoding, rate matching (English: Rate Matching, RM for short), interleaving (English: interleave), modulation, mapping (English: Map), and a sending procedure on the serialized sequence. The channel encoding is polar encoding. Before encoding, the sequence related to the RNTI is used to scramble frozen/PC frozen in a to-be-coded sequence.

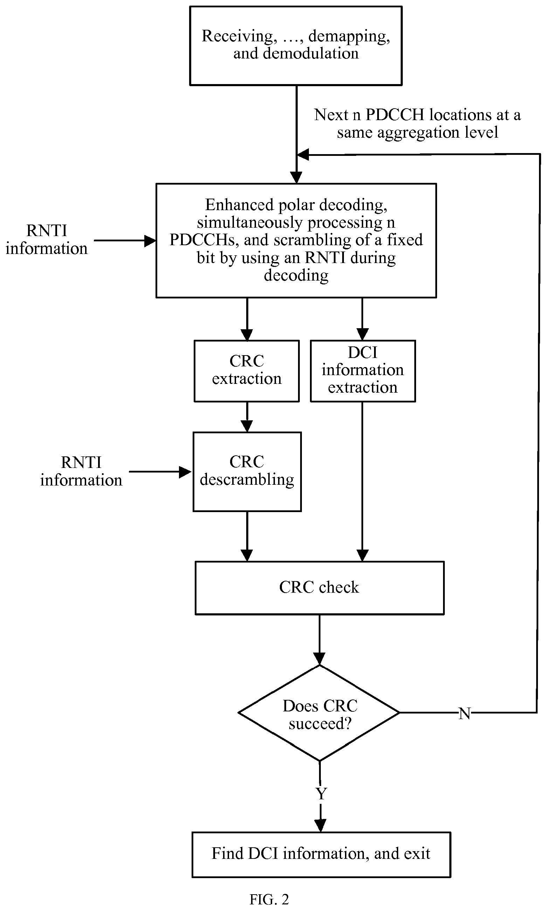

For a receiving procedure of this solution, refer to FIG 2. Two or more candidates at a same aggregation level may be simultaneously decoded. Coded lengths (N) of the two or more simultaneously decoded candidates and a length (K) of a to-be-coded bit (bit) are the same. A quantity of simultaneously decoded candidates cannot exceed an upper limit of a width. Decoding a candidate is actually decoding a log-likelihood ratio (English: Log-Likelihood Ratio, LLR for short) of the candidate.

If time-frequency resource locations of two candidates greatly differ, two LLRs input into a decoder significantly differ, finally causing a loss of decoding performance. Therefore, signal-to-noise ratios (English: Signal-Noise Ratio, SNR for short) of LLRs that are input into the decoder and that are from different candidates are required to be the same. Therefore, before decoding, power balancing needs to be performed on the LLRs. The foregoing solution provides a solution, it is assumed that two candidates are simultaneously decoded, a vector of an LLR of the first candidate is y1, and a vector of an LLR of the second candidate is y2. After balancing, y1p=y1, y2p=y2*sqrt(sum(y1^2)/sum(y2^2)), and then y1p and y2p are sent to the decoder in the foregoing solution for decoding.

Further, US 2012/0063350 A1 refers to an apparatus and a method for monitoring a control channel in a multi-carrier system. A plurality of sub-search spaces within an extended search space corresponds to a plurality of scheduled component carriers, respectively. Each of the plurality of sub-search spaces includes a plurality of control channel elements (CCEs), and the CCEs of the plurality of sub-search spaces are interleaved with each another within the extended search space.

Actually, when a bit width of a fixed point is relatively small, using the foregoing power balancing method generates calculation overheads, and a precision loss is caused during power balancing calculation. Consequently, blind detection at a receive end is affected.

### SUMMARY

A technical problem to be resolved by this application is to provide a resource mapping method and an apparatus thereof, so that a receive end can find, without calculation, a symbol pair with close signal-to-noise ratios at candidate locations at a same aggregation level, which facilitates blind detection at the receive end. This problem is solved by the subject matter of the independent claims. Further implementation forms are provided in the dependent claims.

According to a first aspect, this application provides a resource mapping method according to claim 1.

According to a second aspect, this application provides a network device according to claim 3.

According to a third aspect, this application provides a computer-readable storage medium according to claim 5.

According to a fourth aspect, this application provides a resource demapping method according to claim 2.

According to a fifth aspect, this application provides user equipment according to claim 4.

According to an sixth aspect, this application provides a computer-readable storage medium according to claim 6.

According to this application, the first resource block obtained through the nested-structure mapping is reconstructed, so that the modulated symbols of the same user equipment that are mapped to the time-frequency resource are non-consecutive, and further the user equipment can find, without calculation, a symbol pair with close signal-to-noisc ratios at candidate locations at a same aggregation level, which facilitates the blind detection by the user equipment.

## BRIEF DESCRIPTION OF DRAWINGS

To more clearly describe the technical solutions in this application or the Background, the following describes the accompanying drawings required in this application or the Background.

FIG. 1 is a schematic diagram of a sending procedure of a PDCCH blind detection solution based on a polar code;

FIG. 2 is a schematic diagram of a receiving procedure of a PDCCH blind detection solution based on a polar code;

FIG. 3 is a basic flowchart of wireless communication;

FIG. 4 is an application scenario diagram according to this application;

FIG. 5 is a construction diagram of an Arikan polar code;

FIG. 6 is a construction diagram of a CA polar code;

FIG. 7 is a construction diagram of a PC polar code;

FIG. 8 is a schematic diagram of typical nested-structure resource distribution;

FIG. 9 is an example diagram of resource mapping of a transmit end;

FIG. 10 is an example diagram of candidate distribution for blind detection at a receive end;

FIG. 11 is a flowchart of nested-structure-based communication;

FIG. 12 is a schematic flowchart of a resource mapping method according to this application;

FIG. 13a is an example diagram of resource mapping of a network device according to this application;

FIG. 13b is another example diagram of resource mapping of a network device according to this application;

FIG. 14 is a schematic flowchart of a resource demapping method according to this application;

FIG. 15a is an example diagram of candidate distribution obtained through demapping according to this application;

FIG. 15b is another example diagram of candidate distribution obtained through demapping according to this application;

FIG. 16 is a schematic structural diagram of a resource mapping apparatus according to this application;

FIG. 17 is a schematic structural diagram of a network device according to this application;

FIG. 18 is a schematic structural diagram of a resource demapping apparatus according to this application; and

FIG. 19 is a schematic structural diagram of user equipment according to this application.

## DESCRIPTION OF EMBODIMENTS

The following further describes specific embodiments of this application in detail with reference to accompanying drawings.

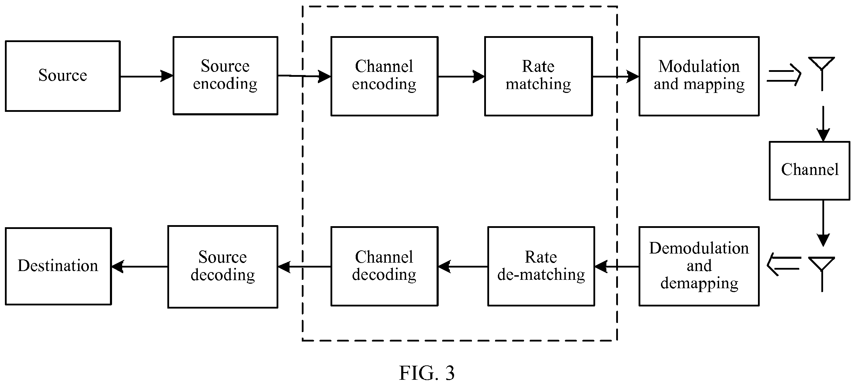

FIG. 3 shows a basic procedure of wireless communication. At a transmit end, a source successively performs source encoding, channel encoding, rate matching, and modulation and mapping for sending. At a receive end, a destination successively performs demapping and demodulation, rate de-matching, channel decoding, and source decoding for receiving. A polar code may be used for the channel encoding and decoding. A code length of an original polar code (a mother code) is an integer power of 2. Therefore, during actual application, a polar code of any code length needs to be implemented through rate matching. At the transmit end, the rate matching is performed after the channel encoding, to implement any target code length. At the receive end, the rate de-matching is performed before the channel decoding. It should be noted that in addition to the basic procedure, the wireless communication further includes additional procedures (for example, precoding and interleaving). In view of that the additional procedures are common general knowledge for a person skilled in the art, examples are not listed one by one. A CRC sequence and CRC information that are mentioned in this application are different names of a same object.

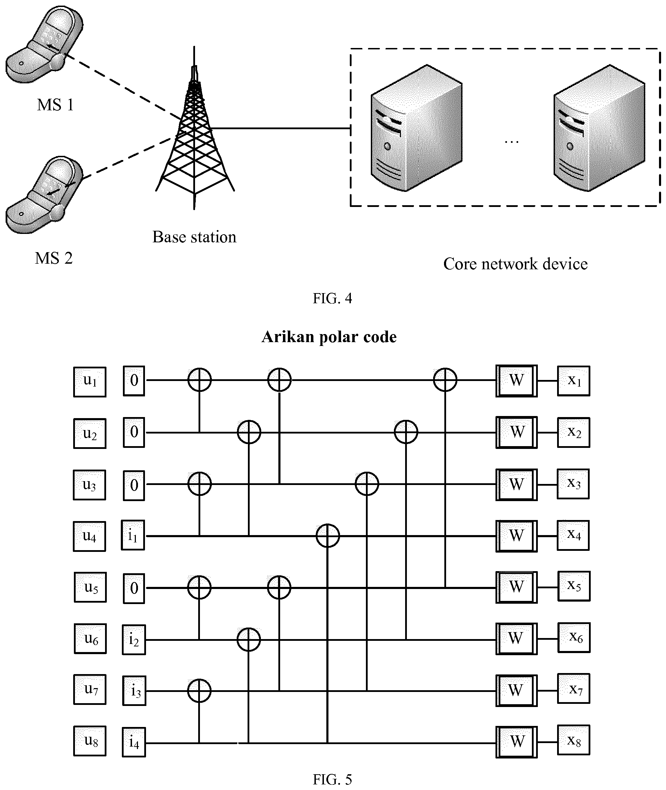

This application may be applied to a wireless communications system. The wireless communications system usually includes cells. Each cell includes a base station (English: Base Station, BS for short), and the base station provides a communication service for a plurality of mobile stations (English: Mobile Station, MS for short). As shown in FIG. 4, the base station is connected to core network devices. The base station includes a baseband unit (English: Baseband Unit, BBU for short) and a remote radio unit (English: Remote Radio Unit, RRU for short). The BBU and the RRU may be placed at different places. For example, the RRU is remotely deployed and is placed in an open area having a high traffic volume, and the BBU is placed in a central equipment room. Alternatively, the BBU and the RRU may be placed in a same equipment room. Alternatively, the BBU and the RRU may be different components on a same rack.

It should be noted that the wireless communications system mentioned in this application includes but is not limited to a narrowband Internet of things (English: Narrow Band-Internet of Things, NB-IoT for short) system, a global system for mobile communications (English: Global System for Mobile Communications, GSM for short) system, an enhanced data rates for GSM evolution (English: Enhanced Data rates for GSM Evolution, EDGE for short) system, a wideband code division multiple access (English: Wideband Code Division Multiple Access, WCDMA for short) system, a code division multiple access 2000 (English: Code Division Multiple Access 2000, CDMA 2000 for short) system, a time division-synchronous code division multiple access (English: Time Division-Synchronization Code Division Multiple Access, TD-SCDMA for short) system, a long term evolution (English: Long Term Evolution, LTE for short) system, and three major application scenarios, namely, enhanced mobile broadband (English: enhanced Mobile Broadband, eMBB for short), ultra-reliable and low latency communications (English: Ultra Reliable Low Latency Communications, URLLC for short), and massive machine type communications (English: massive Machine Type Communications, mMTC for short), of a next-generation 5G mobile communications system.

In this application, the base station is an apparatus deployed in a radio access network and configured to provide a wireless communication function for the MS. The base station may include various forms of macro base stations, micro base stations (also referred to as small cells), relay stations, access points, and the like. A device having a function of a base station may have different names in systems that use different radio access technologies. For example, in the long term evolution (English: Long Term Evolution, LTE for short) system, the device is referred to as an evolved NodeB (English: evolved NodeB, eNB or eNodeB); and in a 3rd generation (English: 3rd Generation, 3G for short) system, the device is referred to as aNodeB (English: NodeB). For ease of description, in all the embodiments of this application, the foregoing apparatuses that provide the wireless communication function for the MS are collectively referred to as a network device.

The MS in this application may include various handheld devices, in-vehicle devices, wearable devices, or computing devices that have the wireless communication function, or other processing devices connected to a wireless modem. The MS may also be referred to as a terminal (English: Terminal). The MS may alternatively include a subscriber unit (English: subscriber unit), a cellular phone (English: cellular phone), a smartphone (English: smartphone), a wireless data card, a personal digital assistant (English: Personal Digital Assistant, PDA for short) computer, a tablet computer, a wireless modem (English: modem), a handset (English: handset), a laptop computer (English: laptop computer), a machine type communication (English: Machine Type Communication, MTC for short) terminal, or the like. For ease of description, in all the embodiments of this application, the devices mentioned above are collectively referred to as user equipment.

The following briefly describes the polar code.

In a communications system, channel encoding is usually performed to improve reliability of data transmission, to ensure quality of communication. The polar code proposed by the Turkish processor Arikan is a code that is first theoretically proved to be capable of achieving a Shannon capacity and that has low encoding and decoding complexity. The polar code is also a linear block code. An encoding matrix of the polar code is $G_N$. An encoding process is

$$x_1^N = u_1^N G_N, \quad u_1^N = (u_1, u_2, \ldots$$ is a binary row vector, and has a length of N (namely, a code length). $G_N$ is an $N \times$

$N$ matrix, and $$G_N = F_2^{\otimes(\log_2(N))}. \quad F_2^{\otimes(\log_2^{(N)})}$$ is defined as a Kronecker (Kronecker) product of $\log_2^N$ matrices $F_2$.

$$F_2 = \begin{bmatrix} 1 & 0 \\ 1 & 1 \end{bmatrix}.$$
The foregoing matrix

In the encoding process of the polar code, some bits in $u_1^N$ are used to carry information, and are referred to as an information bit set. A set of indexes of the bits is denoted by A. The other bits are set to fixed values pre-agreed by the transmit end and the receive end, and are referred to as a fixed bit set or a frozen bit set (frozen bits). A set of indexes of the bits is represented by a complementary set $A^C$ of A. The encoding process of the polar code is equivalent to: $$x_1^N = u_A G_N(A) \oplus u_{A^C} G_N(A^C).$$ Herein, GN(A) is a submatrix obtained by rows corresponding to the indexes in the set A in GN, and GN(AC) is a submatrix obtained by rows corresponding to the indexes in the set $A^C$ in GN. $u_A$

is the information bit set in $u_1^N$, and a quantity of information bits is K. $u_{AC}$ is the fixed bit set in $u_1^N$, a quantity of fixed bits is (N-K), and the fixed bits are known bits. The fixed bits are usually set to 0. However, the fixed bits may be randomly set, provided that the fixed bits are pre-agreed by the transmit end and the receive end. In this way, an encoded output of the polar code may be simplified as: $x_1^N = u_A G_N(A)$. Herein, $u_A$ is the information bit set in $u_1^N$, and $u_A$ is a row vector having a length of K. In other words, |A| = K. |·| represents a quantity of elements in a set, K is a size of an information block, $G_N(A)$ is the submatrix obtained by the rows corresponding to the indexes in the set A in the matrix $G_N$, and $G_N(A)$ is a $K \times N$ matrix.

A construction process of the polar code is a selection process of the set A, and determines performance of the polar code. The construction process of the polar code is usually: determining, based on a code length N of a mother code, that there are N polarized channels in total that respectively correspond to N rows of the encoding matrix, calculating reliability of the polarized channels, using indexes of the first K polarized channels having higher reliability as elements in the set A, and using indexes corresponding to the remaining (N-K) polarized channels as elements in the set $A^C$ of the indexes of the fixed bits. The set A determines locations of the information bits, and the set $A^C$ determines locations of the fixed bits.

It may be learned from the encoding matrix that the code length of an original polar code (the mother code) is an integer power of 2. During actual application, a polar code of any code length needs to be implemented through rate matching.

To improve the performance of the polar code, check precoding is usually first performed on the information bit set, and then polar encoding is performed. There are two common check precoding schemes: CRC concatenated polar encoding and PC concatenated polar encoding. Currently, the polar encoding includes: conventional Arikan polar encoding, CA polar encoding, and PC polar encoding.

Conventional Arikan polar encoding in FIG. 5 is described. {u1, u2, u3, u5} is set as a fixed bit set, {u4, u6, u7, u8} is set as an information bit set, and four information bits in an information vector having a length of 4 are encoded into eight encoded bits.

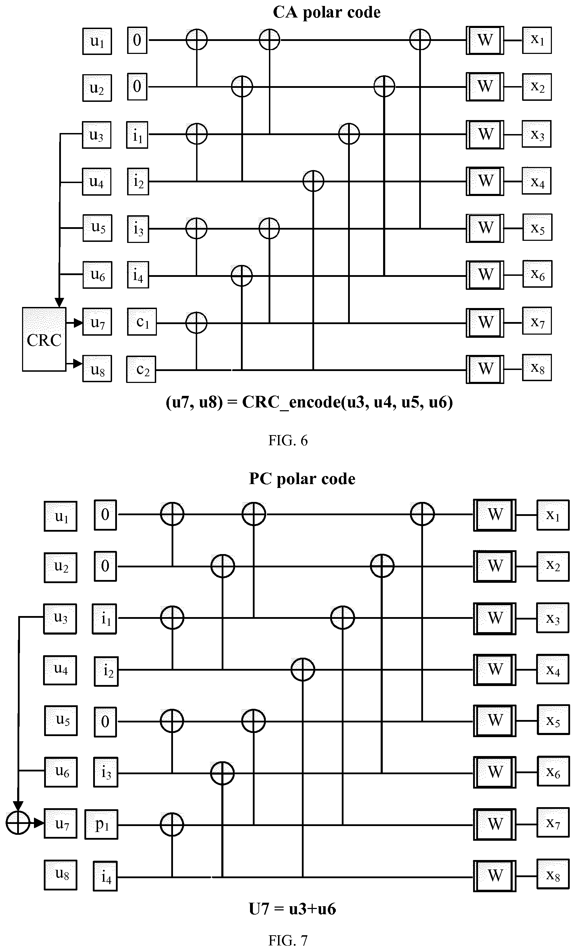

CA polar encoding in FIG. 6 is described. {u1, u2} is set as a fixed bit set, {u3, u4, u5, u6} is set as an information bit set, and {u7, u8} is a CRC bit set. Values of {u7, u8} are obtained by performing CRC on {u3, u4, u5, u6}.

For the CA polar encoding, a CRC-aided successive cancellation list (CRC-Aided Successive Cancellation List, CA-SCL) decoding algorithm is used. In the CA-SCL decoding algorithm, a path on which CRC succeeds is selected, as a decoded output through CRC check, from candidate paths of an SCL decoded output.

PC polar encoding in FIG. 7 is described. {u1, u2, u5} is set as a fixed bit set, {u3, u4, u6, u8} is set as an information bit set, and {u7} is a PC fixed bit set. A value of {u7} is obtained by performing exclusive-OR on {u3, u6}.

For the PC Polar encoding, a decoding algorithm is based on the SCL decoding algorithm. A process of sorting and pruning is completed in the decoding process by using the PC fixed bit set, and a most reliable path is finally output.

The following briefly describes a nested structure.

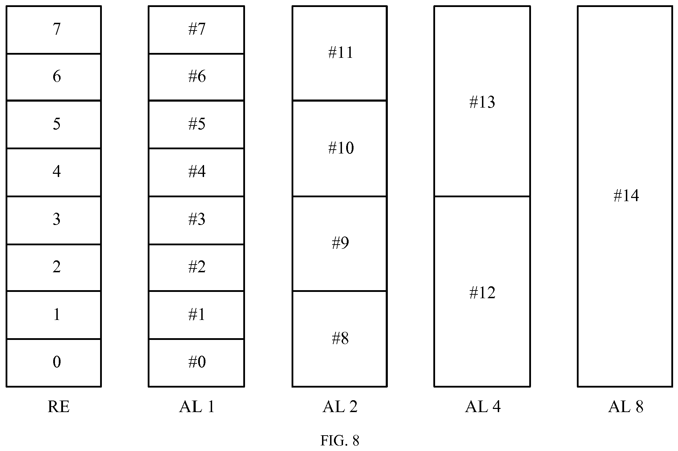

FIG. 8 is a schematic diagram of typical nested-structure resource distribution. That a nested structure includes eight REs and a highest aggregation level supported by the nested structure is an AL 8 is used as an example. FIG. 8 shows eight REs on a leftmost side and candidates included at aggregation levels. For user equipment (English: User Equipment, UE for short), blind detection is performed in four configurations an AL 1 to the AL 8. Eight candidates #0 to #7 are included at the AL 1. Four candidates #8 to #11 are included at the AL 2. Two candidates #12 and #13 are included at the AL 4. Only one candidate #14 is included at the AL 8. The UE needs to perform a maximum of 15 blind detections in total. One time of decoding and one CRC check are needed for each blind detection. If the CRC check succeeds, it indicates that the blind detection succeeds, so that the UE obtains required data. Assuming that one nested structure includes N REs, a quantity of candidates at each AL and a quantity of REs occupied by each candidate are shown in the table below. Quantities of coded bits (English: bit) carried in different candidates at a same AL are the same.

|  | Quantity of candidates | Quantity of occupied REs |
|---|---|---|
| AL 1 | 8 | N/8 |
| AL 2 | 4 | N/4 |
| AL 4 | 2 | N/2 |
| AL 8 | 1 | N/1 |

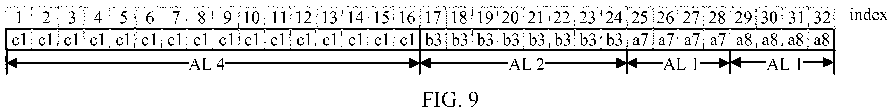

FIG. 9 is an example diagram of resource mapping of a transmit end. That a smallest nested structure (including 32 REs) is filled with one PDCCH at an AL 4, one PDCCH at an AL 2, and two PDCCHs at an AL 1 is used as an example. Indexes of the 32 REs are 1 to 32, and during actual application, may alternatively be 0 to 31. The AL 4 occupies REs whose indexes are 1 to 16. Symbols mapped to the REs are c1. To be specific, a symbol of UE that is carried at a candidate at the AL 4 is c1. The AL 2 occupies REs whose indexes are 17 to 24. Symbols mapped to the REs are b3. To be specific, a symbol of UE that is carried at a candidate at the AL 2 is b3. One AL 1 occupies REs whose indexes are 25 to 28. Symbols mapped to the REs are a7. To be specific, a symbol of UE that is carried at a candidate at the AL 1 is a7. The other AL 1 occupies REs whose indexes are 29 to 32. Symbols mapped to the REs are a8. To be specific, a symbol of UE that is carried at a candidate at the AL 1 is a8.

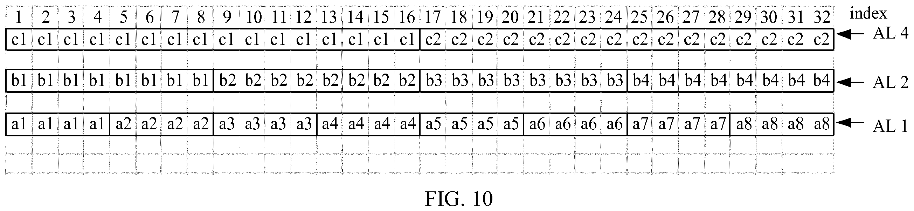

FIG. 10 is an example diagram of candidate distribution for blind detection at a receive end. Demapping is performed at an AL 4 to obtain symbols c1 and c2. Demapping is performed at an AL 2 to obtain symbols b1, b2, b3, and b4. Demapping is performed at an AL 1 to obtain symbols a1, a2, a3, a4, a5, a6, a7, and a8.

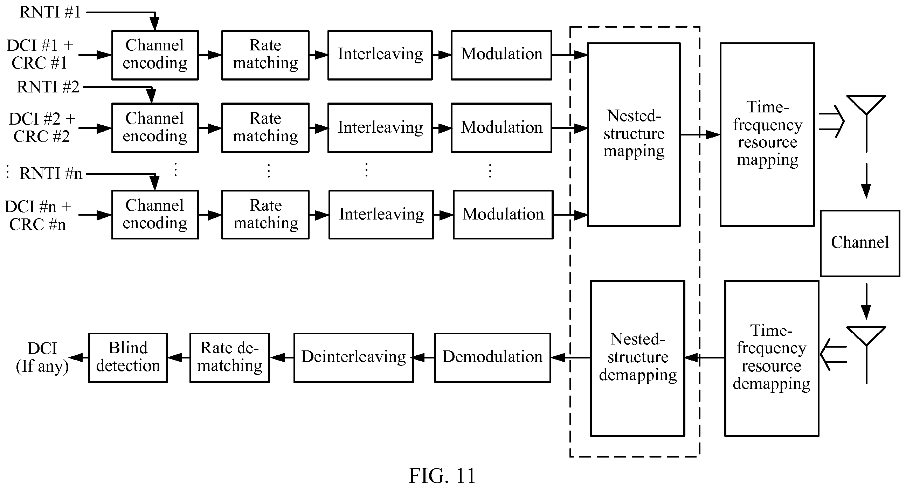

FIG. 11 is a flowchart of nested-structure-based communication. Mapping procedures and demapping procedures in FIG. 3 are elaborated. Two mapping procedures are nested-structure mapping and time-frequency resource mapping. Correspondingly, two demapping procedures are nested-structure demapping and time-frequency resource demapping. The nested-structure mapping is mapping a modulated symbol to a nested-structure resource block. The time-frequency resource mapping is mapping the nested-structure resource block after the nested-structure mapping to a time-frequency resource. FIG. 9 may show a result obtained through two times of mapping. A polar code may be used for channel encoding in FIG. 11. In this case, a procedure at a transmit end is consistent with that in FIG. 1, a procedure at a receive end may be consistent with that in FIG. 2, and two or more candidates at a same aggregation level may be simultaneously decoded during blind detection.

It should be noted that FIG. 9 may be based on FIG. 1, FIG. 10 may be based on FIG. 2, and FIG. 9 and FIG. 10 are merely used for description through an example. Actually, REs in a resource block are not necessarily completely adjacent. Consequently, SNRs of a1 and a2 may be different, or SNRs of b1 and b2 may be different, or SNRs of c1 and c2 may be different, where a1 and a2, b1 and b2, and c1 and c2 are obtained through demapping at the receive end. In other words, SNRs of symbols carried at adjacent candidates at a same aggregation level may be caused to be different.

In view of this, this application provides a resource mapping method and an apparatus thereof, so that a receive end can find, without calculation, a symbol pair with close signal-to-noise ratios at candidate locations at a same aggregation level, which facilitates blind detection at the receive end.

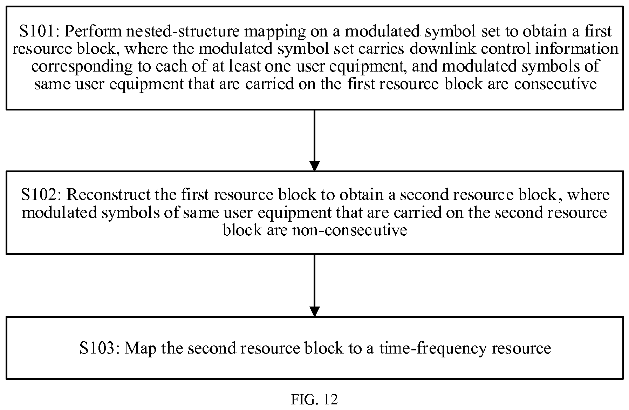

FIG. 12 is a schematic flowchart of a resource mapping method according to this application. The method includes but is not limited to the following steps.

Step S101: A network device performs nested-structure mapping on a modulated symbol set to obtain a first resource block, where the modulated symbol set carries downlink control information corresponding to each of at least one user equipment, and modulated symbols of same user equipment that are carried on the first resource block are consecutive.

The modulated symbol set carries the downlink control information corresponding to each of the at least one user equipment. Symbols in the modulated symbol set that are mapped to the first several slots of a time-frequency resource are used for PDCCH transmission. The modulated symbol set includes a modulated symbol corresponding to each user equipment, namely, a symbol output from a modulation module in FIG. 11 and input into a nested-structure mapping module. Modulation may be quadrature amplitude modulation (Quadrature Amplitude Modulation, QAM) in FIG. 1, or may be modulation in another manner. Referring to FIG. 11, the network device successively performs channel encoding, rate matching, interleaving, and modulation on the DCI information and CRC information of each user equipment, to obtain the modulated symbol corresponding to the user equipment, and further obtain the modulated symbol set. For the channel encoding and a process before the channel encoding, refer to the sending procedure shown in FIG. 1.

The network device performs the nested-structure mapping on the modulated symbol set to obtain the first resource block, and the modulated symbols of the same user equipment that are carried on the first resource block are consecutive. For an effect of mapping the first resource block to the time-frequency resource, refer to FIG. 9. A modulated symbol c1 of user equipment is carried at a candidate at the AL 4. A modulated symbol b3 of user equipment is carried at a candidate at the AL 2. A modulated symbol a7 of user equipment is carried at a candidate at one AL 1. A modulated symbol a8 of user equipment is carried at a candidate at the other AL 1. It may be understood that candidates at which same modulated symbols are carried on the first resource block are consecutive. The same modulated symbols are modulated symbols of same user equipment.

Step S102: The network device reconstructs the first resource block to obtain a second resource block, where modulated symbols of same user equipment that are carried on the second resource block are non-consecutive.

If the first resource block is directly mapped to the time-frequency resource, the SNRs of the symbols that are carried at the adjacent candidates at the same aggregation level and that are obtained through the demapping at the receive end may be caused to be different. For example, in FIG. 10, the SNRs of a1 and a2 may be different, or the SNRs of b1 and b2 may be different, or the SNRs of c1 and c2 may be different. Therefore, in this application, a reconstruction process is added between two sections, namely, the nested-structure mapping and the time-frequency resource mapping, in the schematic flowchart of communication shown in FIG. 11. It may also be understood that the reconstruction process is elaboration of the nested-structure mapping section.

Specifically, the network device reconstructs the first resource block to obtain the second resource block, where the modulated symbols of the same user equipment that are carried on the second resource block are non-consecutive. It may be understood that candidates at which same modulated symbols are carried on the second resource block are non-consecutive.

Solution 1, according to the present invention: The network device performs one time of row-column interleaving processing on the first resource block to obtain the second resource block, where a column width of the one time of row-column interleaving is 2n, and n is a positive integer.

Solution 2: The network device performs at least two times of row-column interleaving processing on the first resource block to obtain the second resource block, where a column width of each of the at least two times of row-column interleaving is 2n, n is a positive integer, and column widths of any two adjacent times of row-column interleaving may be the same or may be different. For example, the column width of each time of row-column interleaving is 2; or a column width of the first time of row-column interleaving is 2, and a column width of the second time of row-column interleaving is 4; or a column width of the first time of row-column interleaving is 2, a column width of the second time of row-column interleaving is 4, and a column width of the third time of row-column interleaving is 2; or a column width of the first time of row-column interleaving is 2, a column width of the second time of row-column interleaving is 4, and a column width of the third time of row-column interleaving is 4. A quantity of the at least two times of row-column interleaving is not limited herein.

It may be understood that the reconstruction is to change a sequence of candidate locations at which same modulated symbols are carried. In this application, reconstruction may alternatively be performed according to another method.

Step S 103: The network device maps the second resource block to a time-frequency resource.

Specifically, the network device maps the second resource block to the time-frequency resource, so that all user equipments within coverage of the network device obtains the modulated symbol set based on the time-frequency resource.

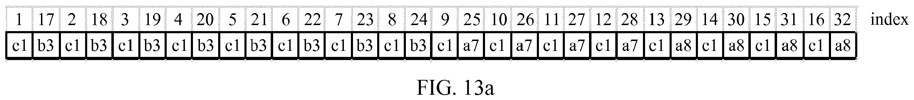

For the solution 1, a column width of the row-column interleaving being 2 is used as an example. For an example diagram of resource mapping of the network device, refer to FIG. 13a. Indexes of REs in FIG. 13a follow the indexes of the REs in FIG. 9. It may be learned that, in FIG. 13a, c1 and b3 are adjacent, c1 and a7 are adjacent, c1 and a8 are adjacent, all c1s are non-consecutive, all b3s are non-consecutive, all a7s are non-consecutive, and all a8s are non-consecutive. In other words, carried modulated symbols of same user equipment are non-consecutive.

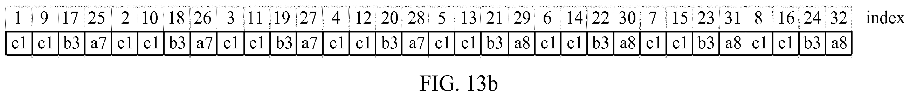

For the solution 2, two times of row-column interleaving and a column width of each time of row-column interleaving being 2 are used as an example. For an example diagram of resource mapping of the network device, refer to FIG. 13b. Indexes of REs in FIG. 13b follow the indexes of the REs in FIG. 9. It may be learned that, in FIG. 13b, c1 and b3 are adjacent, b3 and a7 are adjacent, a7 and c1 are adjacent, c1 and a8 are adjacent, ..., all c1s are non-consecutive, all b3s are non-consecutive, all a7s are non-consecutive, and all a8s are non-consecutive. In other words, carried modulated symbols of same user equipment are non-consecutive.

It should be noted that, the example diagram shown in FIG. 13b can also be obtained if the network device performs one time of row-column interleaving processing having a column width of 4.

Compared with the solution 1, in the solution 2, for a candidate at a lower aggregation level, REs at the candidate can be distributed farther, to achieve a time-frequency diversity effect.

After the second resource block is mapped to the time-frequency resource, the network device sends time-frequency resource indication information to a plurality of user equipments within the coverage of the network device, and indicates a time-frequency resource occupied by a mapped modulated symbol set, to instruct these user equipments to extract the time-frequency resource according to the time-frequency resource indication information, and further make it convenient for these user equipments to obtain the modulated symbol set based on the time-frequency resource. The time-frequency resource indication information may be delivered through wireless signaling.

Optionally, the network device informs, through some signaling, all user equipments in a cell of a quantity of times of row-column interleaving and a column width of each time of row-column interleaving.

In the embodiment shown in FIG. 12, the first resource block obtained through the nested-structure mapping is reconstructed, so that the modulated symbols of the same user equipment that are mapped to the time-frequency resource are non-consecutive, and the receive end can find, without calculation, a symbol pair with close signal-to-noise ratios at candidate locations at a same aggregation level, which facilitates blind detection at the receive end.

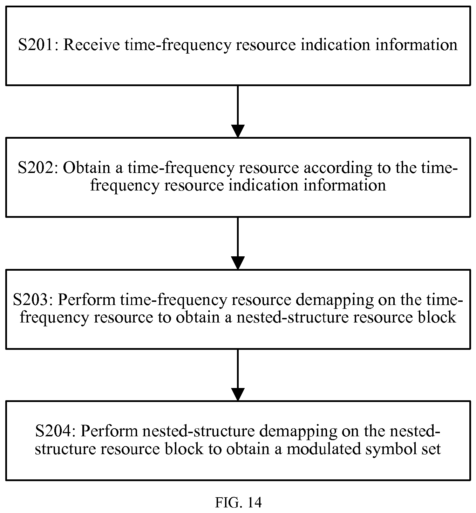

FIG. 14 is a schematic flowchart of a resource demapping method according to this application. The method includes but is not limited to the following steps.

Step S201: User equipment receives time-frequency resource indication information.

Specifically, the user equipment is any one of all user equipments in a cell served by a network device. The user equipment may receive the time-frequency resource indication information through wireless signaling. The time-frequency resource indication information indicates a time-frequency resource occupied by a modulated symbol set mapped by the network device. The modulated symbol set carries downlink control information corresponding to each of at least one user equipment.

Step S202: The user equipment obtains the time-frequency resource according to the time-frequency resource indication information.

Specifically, the user equipment obtains, according to the time-frequency resource indication information, the time-frequency resource occupied by the modulated symbol set mapped by the network device.

Step S203: The user equipment performs time-frequency resource demapping on the time-frequency resource to obtain a nested-structure resource block.

Step S204: The user equipment performs nested-structure demapping on the nested-structure resource block to obtain a modulated symbol set.

After the nested-structure demapping, the user equipment successively performs demodulation, deinterleaving, rate dematching, and blind detection on the modulated symbol set; and the user equipment obtains, if the blind detection succeeds, the downlink control information corresponding to the user equipment, that is, obtains downlink control information sent by the network device for the user equipment. For a process of performing blind detection and decoding by the user equipment, refer to the schematic diagram of the receiving procedure shown in FIG. 2.

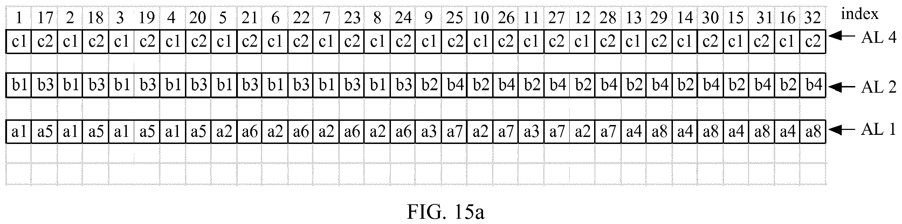

For the solution 1, according to the present invention, in the embodiment described in FIG. 12, for an example diagram of candidate distribution obtained through the nested-structure demapping performed by the user equipment, refer to FIG. 15a. For blind detection at an AL 4 in FIG. 15a, an SNR of c1 is always close to an SNR of c2. For blind detection at an AL 2 in FIG. 15a, an SNR of b1 is always close to an SNR of b3 and an SNR of b2 is always close to an SNR of b4. For blind detection at an AL 1 in FIG. 15a, an SNR of a1 is always close to an SNR of a5, an SNR of a2 is always close to an SNR of a6, an SNR of a3 is always close to an SNR of a7, and an SNR of a4 is always close to an SNR of a8.

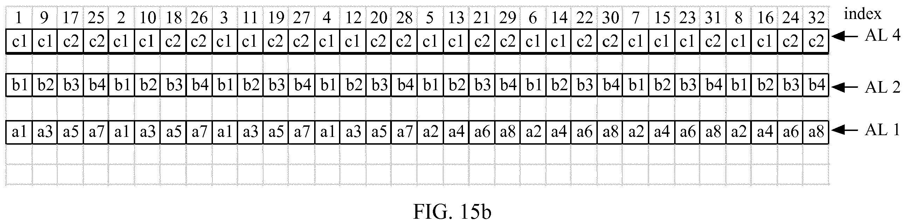

For the solution 2 in the embodiment described in FIG. 12, for an example diagram of candidate distribution obtained through the nested-structure demapping performed by the user equipment, refer to FIG. 15b. For blind detection at an AL 4 in FIG. 15b, an SNR of c1 is always close to an SNR of c2. For blind detection at an AL 2 in FIG. 15b, an SNR of b1 is always close to an SNR of b3 and an SNR of b2 is always close to an SNR of b4. For blind detection at an AL 1 in FIG. 15b, an SNR of a1 is always close to an SNR of a5, an SNR of a2 is always close to an SNR of a6, an SNR of a3 is always close to an SNR of a7, and an SNR of a4 is always close to an SNR of a8.

Regardless of how the network device maps the second resource block to an actual physical resource block in the embodiment described in FIG. 12, because SNRs of adjacent REs are close, a case in which SNRs of modulated symbols at adjacent candidate locations at a same aggregation level are close necessarily exists.

It may be understood that according to the embodiment described in FIG. 12, SNRs of LLRs that are input by the user equipment into a decoder and that are at different candidates at a same aggregation level are made close, and further the blind detection by the user equipment is benefited.

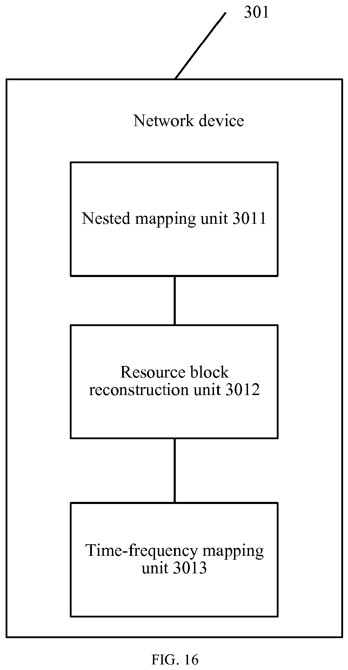

It should be noted that a resource mapping apparatus 301 shown in FIG. 16 may implement the embodiment shown in FIG. 12. A nested mapping unit 3011 is configured to perform step S101. A resource block reconstruction unit 3012 is configured to perform step S102. A time-frequency mapping unit 3013 is configured to perform step S103. The resource mapping apparatus 301 is, for example, a base station. The resource mapping apparatus 301 may alternatively be an application-specific integrated circuit (English: Application Specific Integrated Circuit, ASIC for short) or a digital signal processor (English: Digital Signal Processor, DSP for short) or a chip that implements a related function.

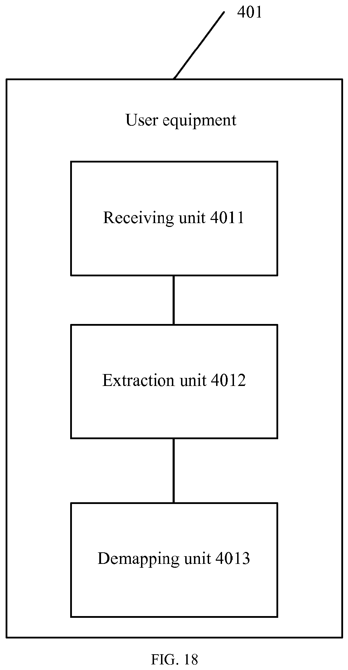

It should be noted that a resource demapping apparatus 401 shown in FIG. 18 can implement the embodiment shown in FIG. 14. A receiving unit 4011 is configured to perform step S201. An extraction unit 4012 is configured to perform step S202. A demapping unit 4013 is configured to perform steps S203 and S204. The resource demapping apparatus 401 is, for example, UE. The resource demapping apparatus 401 may alternatively be an ASIC or a DSP or a chip that implements a related function.

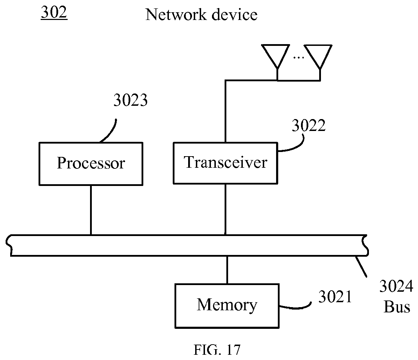

As shown in FIG. 17, this application further provides a network device 302. The network device may be a base station, or a DSP or an ASIC or a chip that implements a related resource mapping function. The network device 302 includes:

a memory 3021, configured to store a program, where the memory may be a random access memory (English: Random Access Memory, RAM for short) or a read-only memory (English: Read Only Memory, ROM for short) or a flash memory, and the memory may be separately located in a communications device, or may be located inside a processor 3023;

a transceiver 3022, which may be used as a separate chip, or may be a transceiver circuit inside the processor 3023 or be used as an input/output interface; and

the processor 3023, configured to execute the program stored in the memory, where when the program is executed, the processor 3023 performs nested-structure mapping on a modulated symbol set to obtain a first resource block, where the modulated symbol set carries downlink control information corresponding to each of at least one user equipment, and modulated symbols of same user equipment that are carried on the first resource block are consecutive; the processor 3023 reconstructs the first resource block to obtain a second resource block, where modulated symbols of same user equipment that are carried on the second resource block are non-consecutive; and the processor 3023 maps the second resource block to a time-frequency resource, so that the user equipment obtains the modulated symbol set based on the time-frequency resource.

The transceiver 3021, the memory 3022, and the processor 3023 are connected to each other by using a bus 3024.

It should be noted that the method performed by the processor 3023 is consistent with the content described in FIG. 12. Details are not described again.

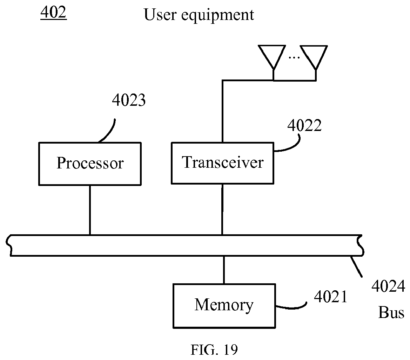

As shown in FIG. 19, this application further provides user equipment 402. The user equipment may be a base station, or a DSP or an ASIC or a chip that implements a related resource mapping function. The user equipment 402 includes:

a memory 4021, configured to store a program, where the memory may be an RAM or an ROM or a flash memory, and the memory may be separately located in a communications device, or may be located inside a processor 4023; a transceiver 4022, configured to receive time-frequency resource indication information, where the transceiver 4022 may be used as a separate chip, or may be a transceiver circuit inside the processor 4023 or be used as an input/output interface; and
the processor 4023, configured to execute the program stored in the memory, where when the program is executed, the processor 4023 performs nested-structure mapping on a modulated symbol set to obtain a first resource block, where the modulated symbol set carries downlink control information corresponding to each of at least one user equipment, and modulated symbols of same user equipment that are carried on the first resource block are consecutive; the processor 4023 reconstructs the first resource block to obtain a second resource block, where modulated symbols of same user equipment that are carried on the second resource block are non-consecutive; and the processor 4023 maps the second resource block to a time-frequency resource, so that the user equipment obtains the modulated symbol set based on the time-frequency resource.

The transceiver 4021, the memory 4022, and the processor 4023 are connected to each other by using a bus 4024.

It should be noted that the method performed by the processor 4023 is consistent with the content described in FIG. 14. Details are not described again.

All or some of the foregoing embodiments may be implemented by using software, hardware, firmware, or any combination thereof. When software is used to implement the embodiments, the embodiments may be implemented completely or partially in a form of a computer program product. The computer program product includes one or more computer instructions. When the computer program instructions are loaded and executed on the computer, the procedures or functions according to the embodiments of this application are all or partially generated. The computer may be a general-purpose computer, a special-purpose computer, a computer network, or another programmable apparatus. The computer instructions may be stored in a computer-readable storage medium or may be transmitted from a computer-readable storage medium to another computer-readable storage medium. For example, the computer instructions may be transmitted from a website, a computer, a server, or a data center to another website, computer, server, or data center in a wired (for example, a coaxial cable, an optical fiber, or a digital subscriber line (English: Digital Subscriber Line, DSL for short)) or wireless (for example, infrared, radio, and microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD (English: Digital Video Disk, Chinese: digital video disc)), a semiconductor medium (for example, a solid state disk (English: Solid State Disk, SSD for short)), or the like.

**Claims**

1. A method performed by a network device, the method comprising:

• performing a Cylic Redundancy Check encoding, CRC encoding, on downlink control information of each user equipment of at least one user equipment, thereby arriving at CRC encoded downlink control information, the CRC encoded downlink control information containing CRC bits and those information bits corresponding to the downlink control information;

• scrambling, for CRC encoded downlink control information of each user equipment among the at least one user equipment, the CRC bits of the CRC encoded downlink control information with a sequence related to a radio network temporary identifier of the user equipment to which the downlink control information corresponds to, thereby arriving at first scrambled CRC encoded downlink control information;

• scrambling, for each first scrambled downlink control information of each user equipment of the at least one user equipment, frozen bits with the sequence related to the radio network temporary identifier of the user equipment to which the corresponding downlink control information corresponds to, thereby arriving at second scrambled downlink control information for each user equipment among the at least one user equipment, the second scrambled downlink control information containing the scrambled CRC bits, the information bits and the scrambled frozen bits;

• performing, for the second scrambled downlink control information of each user equipment of the at least one user equipment, channel encoding on the second scrambled downlink control information of the user equipment by using a Polar code, thereby arriving at encoded second scrambled downlink control information for each user equipment of the at least one user equipment;

• successively performing rate matching, interleaving, and modulation on the encoded second scrambed downlink control information of each user equipment among the at least one user equipment, thereby obtaining a modulated symbol set, wherein the modulated symbol set comprises modulated symbols corresponding to each user equipment among the at least one user equipment;

• performing nested-structure aggregation level mapping on the modulated symbol set to obtain a first resource block, wherein modulated symbols of a same user equipment that are carried on the first resource block are consecutive;

• reconstructing the first resource block to obtain a second resource block, wherein modulated symbols of the same user equipment that are carried on the second resource block are non-consecutive, wherein the reconstructing the first resource block to obtain the second resource block comprises:
  ◦ performing one time of row-column interleaving on the first resource block to obtain the second resource block, wherein a column width of the one time of row-column interleaving is 2n, and n is a positive integer;

• mapping the second resource block to a time-frequency resource;

• sending time-frequency resource indication information to each user equipment among the at least one user equipment, the time-frequency resource indication information indicating the time-frequency resource;

• sending the second resource block on the time-frequency resource to each user equipment among the at least one user equipment.

2. A method performed by a first user equipment , the method comprising:

• receiving time-frequency resource indication information, and obtaining a time-frequency resource according to the time-frequency resource indication information;

• receiving a second resource block based on the obtained time-frequency resource;

• reconstructing a first resource block based on the second resource block, wherein modulated symbols of a same user equipment that are carried on the second resource block are non-consecutive, wherein the reconstructing the first resource block to obtain the second resource block comprises:
  ◦ performing one time of row-column deinterleaving on the second resource block to obtain the first resource block, wherein a column width of the one time of row-column deinterleaving is 2n, and n is a positive integer;

• performing nested-structure aggregation level demapping on the first resource block to obtain a modulated symbol set, wherein the modulated symbol set carries downlink control information corresponding to each of at least one user equipment, wherein modulated symbols of a same user equipment that are carried on the first resource block are consecutive;

• performing sucessively demodulation, deinterleaving, and rate dematching on the modulated symbol set, thereby arriving at encoded scrambled downlink control information of each user equipment among the at least one user equipment, wherein each encoded scrambled downlink control information contains scrambled Cyclic Redundancy Check, CRC, bits, information bits corresponding to downlink control information and scrambled frozen bits, wherein, for each encoded scrambled downlink control information of each user equipment among the at least one user equipment, the frozen bits and the CRC bits are separately scrambled with a same sequence related to a radio network temporary identifier of a user equipment to which the corresponding encoded scrambled downlink control information corresponds to;

• decoding the encoded scrambled downlink control information with a Polar Code, thereby arriving at decoded scrambled downlink control information for each user equipment among the at least one user equipment;

• descrambling, for each scrambled downlink control information of each encoded downlink control information, the decoded scrambled frozen bits with a sequence related to a radio network temporary identifier of the first user equipment, thereby arriving at a first descrambled decoded downlink control information for each user equipment among the at least one user equipment;

• descrambling, for each first scrambled downlink control information of each encoded downlink control information, the scrambled CRC bits with the sequence related to the radio network temporary identifier of the first user equipment, thereby arriving at a second descrambled decoded downlink control information for each user equipment among the at least one user equipment;

• performing a CRC check on each second descrambled decoded downlink control information of each user equipment of the at least one user equipment by using the descrambled CRC bits of the second descrambled decoded downlink control information and by using the information bits of the second descrambled decoded downlink control information;

• if the CRC check is successful, obtaining the downlink control information for which the CRC check was successful.

3. A network device comprising means for carrying out the method according to claim 1.

4. A user equipment comprising means for carrying out the method according to claim 2.

5. A computer-readable storage medium, comprising instructions which, when executed by a computer, cause the computer to carry out the resource mapping method according to claim 1.

6. A computer-readable storage medium, comprising instructions which, when executed by a computer, cause the computer to carry out the resource demapping method according to claim 2.


**Patentansprüche**

1. Verfahren, das durch ein Netzgerät durchgeführt wird, wobei das Verfahren Folgendes umfasst:

• Durchführen einer CRC-Codierung (CRC = "Cylic Redundancy Check") an Downlink-Steuerinformationen jedes Teilnehmergeräts von mindestens einem Teilnehmergerät, wodurch zu CRC-codierten Downlink-Steuerinformationen gelangt wird, wobei die CRC-codierten Downlink-Steuerinformationen CRC-Bits und diejenigen Informationsbits, die mit den Downlink-Steuerinformationen korrespondieren, enthalten;

• für CRC-codierte Downlink-Steuerinformationen jedes Teilnehmergeräts unter dem mindestens einen Teilnehmergerät Verwürfeln der CRC-Bits der CRC-codierten Downlink-Steuerinformationen mit einer Sequenz mit Bezug auf einen "Radio Network Temporary Identifier" des Teilnehmergeräts, mit dem die Downlink-Steuerinformationen korrespondieren, wodurch zu ersten verwürfelten CRC-codierten Downlink-Steuerinformationen gelangt wird;

• für alle ersten verwürfelten Downlink-Steuerinformationen jedes Teilnehmergeräts des mindestens einen Teilnehmergeräts Verwürfeln eingefrorener Bits mit der Sequenz mit Bezug auf den "Radio Network Temporary Identifier" des Teilnehmergeräts, mit dem die korrespondierenden Downlink-Steuerinformationen korrespondieren, wodurch zu zweiten verwürfelten Downlink-Steuerinformationen für jedes Teilnehmergerät unter dem mindestens einen Teilnehmergerät gelangt wird, wobei die zweiten verwürfelten Downlink-Steuerinformationen die verwürfelten CRC-Bits, die Informationsbits und die verwürfelten eingefrorenen Bits enthalten;

• für die zweiten verwürfelten Downlink-Steuerinformationen jedes Teilnehmergeräts des mindestens einen Teilnehmergeräts Durchführen einer Kanalcodierung an den zweiten verwürfelten Downlink-Steuerinformationen des Teilnehmergeräts durch Nutzung eines Polarcodes, wodurch zu codierten zweiten verwürfelten Downlink-Steuerinformationen für jedes Teilnehmergerät des mindestens einen Teilnehmergeräts gelangt wird;

• sukzessives Durchführen einer Ratenanpassung, einer Verschränkung und einer Modulation an den codierten zweiten verwürfelten Downlink-Steuerinformationen jedes Teilnehmergeräts unter dem mindestens einen Teilnehmergerät, wodurch ein modulierter Symbolsatz erhalten wird, wobei der modulierte Symbolsatz modulierte Symbole, die mit jedem Teilnehmergerät unter dem mindestens einen Teilnehmergerät korrespondieren, umfasst;

• Durchführen einer Verschachtelungsstruktur-Aggregationsgrad-Zuordnung am modulierten Symbolsatz, um einen ersten Ressourcenblock zu erhalten, wobei modulierte Symbole eines selben Teilnehmergeräts, die im ersten Ressourcenblock übermittelt werden, aufeinanderfolgen;

• Wiederherstellen des ersten Ressourcenblocks, um einen zweiten Ressourcenblock zu erhalten, wobei modulierte Symbole desselben Teilnehmergeräts, die im zweiten Ressourcenblock übermittelt werden, nicht aufeinanderfolgen,

wobei das Wiederherstellen des ersten Ressourcenblocks, um den zweiten Ressourcenblock zu erhalten, Folgendes umfasst:

◦ Durchführen einer einmaligen Zeilen-Spalten-Verschränkung am ersten Ressourcenblock, um den zweiten Ressourcenblock zu erhalten, wobei eine Spaltenbreite der einmaligen Zeilen-Spalten-Verschränkung 2n und n eine positive ganze Zahl ist;

• Zuordnen des zweiten Ressourcenblocks zu einer Zeit-Frequenz-Ressource;

• Senden von Zeit-Frequenz-Ressource-Anzeige-Informationen an jedes Teilnehmergerät unter dem mindestens einen Teilnehmergerät, wobei die Zeit-Frequenz-Ressource-Anzeige-Informationen die Zeit-Frequenz-Ressource anzeigen;

• Senden des zweiten Ressourcenblocks in der Zeit-Frequenz-Ressource an jedes Teilnehmergerät unter dem mindestens einen Teilnehmergerät.

2. Verfahren, das durch ein erstes Teilnehmergerät durchgeführt wird, wobei das Verfahren Folgendes umfasst:

• Empfangen von Zeit-Frequenz-Ressource-Anzeige-Informationen und Erhalten einer Zeit-Frequenz-Ressource gemäß den Zeit-Frequenz-Ressource-Anzeige-Informationen;

• Empfangen eines zweiten Ressourcenblocks basierend auf der erhaltenen Zeit-Frequenz-Ressource;

• Wiederherstellen eines ersten Ressourcenblocks basierend auf dem zweiten Ressourcenblock, wobei modulierte Symbole eines selben Teilnehmergeräts, die im zweiten Ressourcenblock übermittelt werden, nicht aufeinanderfolgen,

wobei das Wiederherstellen des ersten Ressourcenblocks, um den zweiten Ressourcenblock zu erhalten, Folgendes umfasst:

◦ Durchführen einer einmaligen Zeilen-Spalten-Verschränkungsaufhebung am zweiten Ressourcenblock, um den ersten Ressourcenblock zu erhalten, wobei eine Spaltenbreite der einmaligen Zeilen-Spalten-Verschränkungsaufhebung 2n und n eine positive ganze Zahl ist;

• Durchführen einer Verschachtelungsstruktur-Aggregationsgrad-Zuordnungsaufhebung am ersten Ressourcenblock, um einen modulierten Symbolsatz zu erhalten, wobei der modulierte Symbolsatz Downlink-Steuerinformationen, die mit jedem von mindestens einem Teilnehmergerät korrespondieren, übermittelt, wobei modulierte Symbole eines selben Teilnehmergeräts, die im ersten Ressourcenblock übermittelt werden, aufeinanderfolgen;

• sukzessives Durchführen einer Demodulation, einer Verschränkungsaufhebung und einer Ratenanpassungsaufhebung am modulierten Symbolsatz, wodurch zu codierten, verwürfelten Downlink-Steuerinformationen jedes Teilnehmergeräts unter dem mindestens einen Teilnehmergerät gelangt wird,

wobei alle codierten, verwürfelten Downlink-Steuerinformationen verwürfelte CRC-Bits (CRC = "Cyclic Redundancy Check"), Informationsbits, die mit Downlink-Steuerinformationen korrespondieren, und verwürfelte gefrorene Bits enthalten, wobei für alle codierten, verwürfelten Downlink-Steuerinformationen jedes Teilnehmergeräts unter dem mindestens einen Teilnehmergerät die gefrorenen Bits und die CRC-Bits separat mit einer selben Sequenz mit Bezug auf einen "Radio Network Temporary Identifier" eines Teilnehmergeräts, mit dem die korrespondierenden codierten, verwürfelten Downlink-Steuerinformationen korrespondieren, verwürfelt werden;

• Decodieren der codierten, verwürfelten Downlink-Steuerinformationen mit einem Polarcode, wodurch zu decodierten, verwürfelten Downlink-Steuerinformationen für jedes Teilnehmergerät unter dem mindestens einen Teilnehmergerät gelangt wird;

• für alle verwürfelten Downlink-Steuerinformationen aller codierten Downlink-Steuerinformationen Entwürfeln der decodierten, verwürfelten gefrorenen Bits mit einer Sequenz mit Bezug auf einen "Radio Network Temporary Identifier" des ersten Teilnehmergeräts, wodurch zu ersten entwürfelten, decodierten Downlink-Steuerinformationen für jedes Teilnehmergerät unter dem mindestens einen Teilnehmergerät gelangt wird;

• für alle ersten verwürfelten Downlink-Steuerinformationen aller codierten Downlink-Steuerinformationen Entwürfeln der verwürfelten CRC-Bits mit der Sequenz mit Bezug auf den "Radio Network Temporary Identifier" des ersten Teilnehmergeräts, wodurch zu zweiten entwürfelten, decodierten Downlink-Steuerinformationen für jedes Teilnehmergerät unter dem mindestens einen Teilnehmergerät gelangt wird;

• Durchführen einer CRC-Prüfung an allen zweiten entwürfelten, decodierten Downlink-Steuerinformationen jedes Teilnehmergeräts des mindestens einen Teilnehmergeräts durch Nutzung der entwürfelten CRC-Bits der zweiten entwürfelten, decodierten Downlink-Steuerinformationen und durch Nutzung der Informationsbits der zweiten entwürfelten, decodierten Downlink-Steuerinformationen;

• wenn die CRC-Prüfung erfolgreich ist, Erhalten der Downlink-Steuerinformationen, für die die CRC-Prüfung erfolgreich war.

**3.** Netzgerät, das Mittel zum Ausführen des Verfahrens nach Anspruch 1 umfasst.

**4.** Teilnehmergerät, das Mittel zum Ausführen des Verfahrens nach Anspruch 2 umfasst.

**5.** Computerlesbares Speichermedium, das Befehle umfasst, die, wenn sie durch einen Computer laufen gelassen werden, bewirken, dass der Computer das Ressourcenzuordnungsverfahren nach Anspruch 1 ausführt.

**6.** Computerlesbares Speichermedium, das Befehle umfasst, die, wenn sie durch einen Computer laufen gelassen werden, bewirken, dass der Computer das Ressourcenzuordnungsaufhebungsverfahren nach Anspruch 2 ausführt.

**Revendications**

**1.** Procédé exécuté par un dispositif de réseau, le procédé comprenant :

l'exécution d'un codage par contrôle par redondance cyclique, codage CRC, sur des informations de commande de liaison descendante de chaque équipement d'utilisateur d'au moins un équipement d'utilisateur, ce qui permet d'obtenir des informations de commande de liaison descendante codées par CRC, les informations de commande de liaison descendante codées par CRC contenant des bits CRC et ces bits d'informations correspondant aux informations de commande de liaison descendante ;
le brouillage, pour les informations de commande de liaison descendante codées par CRC de chaque équipement d'utilisateur parmi l'au moins un équipement d'utilisateur, des bits CRC des informations de commande de liaison descendante codées par CRC avec une séquence relative à un identifiant temporaire de réseau radio de l'équipement d'utilisateur auquel correspondent les informations de commande de liaison descendante, ce qui permet d'obtenir des premières informations de commande de liaison descendante codées par CRC brouillées ;
le brouillage, pour chaque première information de commande de liaison descendante brouillée de chaque équipement d'utilisateur de l'au moins un équipement d'utilisateur, de bits gelés avec la séquence relative à l'identifiant temporaire de réseau radio de l'équipement d'utilisateur auquel correspondent les informations de commande de liaison descendante correspondantes, ce qui permet d'obtenir des secondes informations de commande de liaison descendante brouillées pour chaque équipement d'utilisateur parmi l'au moins un équipement d'utilisateur,
les secondes informations de commande de liaison descendante brouillées contenant les bits CRC brouillés, les bits d'informations et les bits gelés brouillés ;
l'exécution, pour les secondes informations de commande de liaison descendante brouillées de chaque équipement d'utilisateur de l'au moins un équipement d'utilisateur, d'un codage de canal sur les secondes informations de commande de liaison descendante brouillées de l'équipement d'utilisateur au moyen d'un code polaire, ce qui permet d'obtenir des secondes informations de commande de liaison descendante brouillées codées pour chaque équipement d'utilisateur de l'au moins un équipement d'utilisateur ;
l'exécution successive d'une mise en correspondance de débit, d'un entrelacement et d'une modulation sur les secondes informations de commande de liaison descendante brouillées codées de chaque équipement d'utilisateur parmi l'au moins un équipement d'utilisateur, ce qui permet d'obtenir un ensemble de symboles modulés, dans lequel l'ensemble de symboles modulés comprend des symboles modulés correspondant à chaque équipement d'utilisateur parmi l'au moins un équipement d'utilisateur ;
l'exécution d'un mappage de niveau d'agrégation de structure imbriquée sur l'ensemble de symboles modulés pour obtenir un premier bloc de ressource, dans lequel les symboles modulés d'un même équipement d'utilisateur qui sont transportés sur le premier bloc de ressource sont consécutifs ;
la reconstruction du premier bloc de ressource pour obtenir un second bloc de ressource, dans lequel les symboles modulés du même équipement d'utilisateur qui sont transportés sur le second bloc de ressource ne sont pas consécutifs,
dans lequel la reconstruction du premier bloc de ressource pour obtenir le second bloc de ressource comprend :

l'exécution d'un entrelacement de rangées et de colonnes une fois sur le premier bloc de ressource pour obtenir le second bloc de ressource, dans lequel une largeur de colonne de l'entrelacement de rangées et de colonnes exécuté une fois est égale à 2n, et n est un entier positif ;

le mappage du second bloc de ressource avec une ressource temps-fréquence ;

l'envoi d'informations d'indication de ressource temps-fréquence à chaque équipement d'utilisateur parmi l'au moins un équipement d'utilisateur, les informations d'indication de ressource temps-fréquence indiquant la ressource temps-fréquence ;

l'envoi du second bloc de ressource sur la ressource temps-fréquence à chaque équipement d'utilisateur parmi l'au moins un équipement d'utilisateur.

2. Procédé exécuté par un premier équipement d'utilisateur, le procédé comprenant :

la réception d'informations d'indication de ressource temps-fréquence, et l'obtention d'une ressource temps-fréquence conformément aux informations d'indication de ressource temps-fréquence ;

la réception d'un second bloc de ressource sur la base de la ressource temps-fréquence obtenue ;

la reconstruction d'un premier bloc de ressource sur la base du second bloc de ressource, dans lequel des symboles modulés d'un même équipement d'utilisateur qui sont transportés sur le second bloc de ressource ne sont pas consécutifs,

dans lequel la reconstruction du premier bloc de ressource pour obtenir le second bloc de ressource comprend :

l'exécution d'un désentrelacement de rangées et de colonnes une fois sur le second bloc de ressource pour obtenir le premier bloc de ressource, dans lequel une largeur de colonne du désentrelacement de rangées et de colonnes exécuté une fois est égale à 2n, et n est un entier positif ;

l'exécution d'un démappage de niveau d'agrégation de structure imbriquée sur le premier bloc de ressource pour obtenir un ensemble de symboles modulés, dans lequel l'ensemble de symboles modulés transporte des informations de commande de liaison descendante correspondant à chacun de l'au moins un équipement d'utilisateur,

dans lequel les symboles modulés d'un même équipement d'utilisateur qui sont transportés sur le premier bloc de ressource sont consécutifs ;

l'exécution successive d'une démodulation, d'un désentrelacement et d'une suppression de correspondance de débit sur l'ensemble de symboles modulés, ce qui permet d'obtenir des informations de commande de liaison descendante brouillées codées de chaque équipement d'utilisateur parmi l'au moins un équipement d'utilisateur,

dans lequel chaque information de commande de liaison descendante brouillée codée contient des bits brouillés de contrôle par redondance cyclique, CRC, des bits d'informations correspondant aux informations de commande de liaison descendante et des bits gelés brouillés,

dans lequel, pour chaque information de commande de liaison descendante brouillée codée de chaque équipement d'utilisateur parmi l'au moins un équipement d'utilisateur, les bits gelés et les bits CRC sont brouillés séparément avec une même séquence relative à un identifiant temporaire de réseau radio d'un équipement d'utilisateur auquel correspondent les informations de commande de liaison descendante brouillées codées correspondantes ;

le décodage des informations de commande de liaison descendante brouillées codées à l'aide d'un code polaire, ce qui permet d'obtenir des informations de commande de liaison descendante brouillées décodées pour chaque équipement d'utilisateur parmi l'au moins un équipement d'utilisateur ;

le désembrouillage, pour chaque information de commande de liaison descendante brouillée de chaque information de commande de liaison descendante codée, des bits gelés brouillés décodés avec une séquence relative à un identifiant temporaire de réseau radio du premier équipement d'utilisateur, ce qui permet d'obtenir des premières informations de commande de liaison descendante décodées désembrouillées pour chaque équipement d'utilisateur parmi l'au moins un équipement d'utilisateur ;

le désembrouillage, pour chaque première information de commande de liaison descendante brouillée de chaque information de commande de liaison descendante codée, des bits CRC brouillés avec la séquence relative à l'identifiant temporaire de réseau radio du premier équipement d'utilisateur, ce qui permet d'obtenir des secondes informations de commande de liaison descendante décodées désembrouillées pour chaque équipement d'utilisateur parmi l'au moins un équipement d'utilisateur ;

l'exécution d'un contrôle CRC sur chaque seconde information de commande de liaison descendante décodée désembrouillée de chaque équipement d'utilisateur de l'au moins un équipement d'utilisateur au moyen des bits CRC désembrouillés des secondes informations de commande de liaison descendante décodées désembrouillées et au moyen des bits d'informations des secondes informations de commande de liaison descendante décodées désembrouillées ;

si le contrôle CRC est réussi, l'obtention des informations de commande de liaison descendante pour lesquelles le contrôle CRC a réussi.

**3.** Dispositif de réseau comprenant des moyens d'exécution du procédé selon la revendication 1.

**4.** Équipement d'utilisateur comprenant des moyens d'exécution du procédé selon la revendication 2.

**5.** Support de stockage lisible par ordinateur, comprenant des instructions qui, lorsqu'elles sont exécutées par un ordinateur, amènent l'ordinateur à exécuter le procédé de mappage de ressources selon la revendication 1.

**6.** Support de stockage lisible par ordinateur, comprenant des instructions qui, lorsqu'elles sont exécutées par un ordinateur, amènent l'ordinateur à exécuter le procédé de démappage de ressources selon la revendication 2.

DCI information

```
            ┌──────────────┐
            │     CRC      │
            │   encoding   │
            └──────────────┘
                    │
                    ▼
  RNTI        ┌──────────────┐
information ──▶│     CRC      │
            │  scrambling  │
            └──────────────┘
                    │
                    ▼
        ┌──────────────────────────────┐
        │ PDCCH and CRC serialization  │
        └──────────────────────────────┘
                    │
                    ▼
  RNTI        ┌──────────────────────────────┐
information ──▶│    Polar encoding, and       │
            │ scrambling of a fixed bit by │
            │ using a sequence related to an│
            │            RNTI              │
            └──────────────────────────────┘
                    │
                    ▼
        ┌──────────────────────────────┐
        │ Modulation, mapping, …, and  │
        │           sending            │
        └──────────────────────────────┘
```

FIG. 1

FIG. 2

FIG. 3

FIG. 4

**Arikan polar code**

FIG. 5

## CA polar code

(u7, u8) = CRC_encode(u3, u4, u5, u6)

FIG. 6

## PC polar code

U7 = u3+u6

FIG. 7

| RE | AL 1 | AL 2 | AL 4 | AL 8 |
|----|------|------|------|------|
| 7 | #7 | #11 | #13 | #14 |
| 6 | #6 | #10 | | |
| 5 | #5 | #9 | #12 | |
| 4 | #4 | #8 | | |
| 3 | #3 | | | |
| 2 | #2 | | | |
| 1 | #1 | | | |
| 0 | #0 | | | |

FIG. 8

FIG. 9

EP 3 592 074 B1

| index | 1 | 2 | 3 | 4 | 5 | 6 | 7 | 8 | 9 | 10 | 11 | 12 | 13 | 14 | 15 | 16 | 17 | 18 | 19 | 20 | 21 | 22 | 23 | 24 | 25 | 26 | 27 | 28 | 29 | 30 | 31 | 32 | |
|---|---|---|---|---|---|---|---|---|---|---|---|---|---|---|---|---|---|---|---|---|---|---|---|---|---|---|---|---|---|---|---|---|---|
| AL 4 | c1 | c1 | c1 | c1 | c1 | c1 | c1 | c1 | c1 | c1 | c1 | c1 | c1 | c1 | c1 | c1 | c2 | c2 | c2 | c2 | c2 | c2 | c2 | c2 | c2 | c2 | c2 | c2 | c2 | c2 | c2 | c2 | ← |
| AL 2 | b1 | b1 | b1 | b1 | b1 | b1 | b1 | b1 | b2 | b2 | b2 | b2 | b2 | b2 | b2 | b2 | b3 | b3 | b3 | b3 | b3 | b3 | b3 | b3 | b4 | b4 | b4 | b4 | b4 | b4 | b4 | b4 | ← |
| AL 1 | a1 | a1 | a1 | a1 | a2 | a2 | a2 | a2 | a3 | a3 | a3 | a3 | a4 | a4 | a4 | a4 | a5 | a5 | a5 | a5 | a6 | a6 | a6 | a6 | a7 | a7 | a7 | a7 | a8 | a8 | a8 | a8 | ← |

FIG. 10

FIG. 11

S101: Perform nested-structure mapping on a modulated symbol set to obtain a first resource block, where the modulated symbol set carries downlink control information corresponding to each of at least one user equipment, and modulated symbols of same user equipment that are carried on the first resource block are consecutive

S102: Reconstruct the first resource block to obtain a second resource block, where modulated symbols of same user equipment that are carried on the second resource block are non-consecutive

S103: Map the second resource block to a time-frequency resource

FIG. 12

| 1 | 17 | 2 | 18 | 3 | 19 | 4 | 20 | 5 | 21 | 6 | 22 | 7 | 23 | 8 | 24 | 9 | 25 | 10 | 26 | 11 | 27 | 12 | 28 | 13 | 29 | 14 | 30 | 15 | 31 | 16 | 32 | index |
|---|---|---|---|---|---|---|---|---|---|---|---|---|---|---|---|---|---|---|---|---|---|---|---|---|---|---|---|---|---|---|---|---|
| c1 | b3 | c1 | b3 | c1 | b3 | c1 | b3 | c1 | b3 | c1 | b3 | c1 | b3 | c1 | b3 | c1 | a7 | c1 | a7 | c1 | a7 | c1 | a7 | c1 | a8 | c1 | a8 | c1 | a8 | c1 | a8 | |

FIG. 13a

| 1 | 9 | 17 | 25 | 2 | 10 | 18 | 26 | 3 | 11 | 19 | 27 | 4 | 12 | 20 | 28 | 5 | 13 | 21 | 29 | 6 | 14 | 22 | 30 | 7 | 15 | 23 | 31 | 8 | 16 | 24 | 32 | index |
|---|---|----|----|---|----|----|----|---|----|----|----|---|----|----|----|---|----|----|----|---|----|----|----|---|----|----|----|---|----|----|----|-------|
| c1 | c1 | b3 | a7 | c1 | c1 | b3 | a7 | c1 | c1 | b3 | a7 | c1 | c1 | b3 | a7 | c1 | c1 | b3 | a8 | c1 | c1 | b3 | a8 | c1 | c1 | b3 | a8 | c1 | c1 | b3 | a8 | |

FIG. 13b

S201: Receive time-frequency resource indication information

S202: Obtain a time-frequency resource according to the time-frequency resource indication information

S203: Perform time-frequency resource demapping on the time-frequency resource to obtain a nested-structure resource block

S204: Perform nested-structure demapping on the nested-structure resource block to obtain a modulated symbol set

FIG. 14

FIG. 15a

FIG. 15b

| index | AL 4 | AL 2 | AL 1 |
|---|---|---|---|
| 1 | c1 | b1 | a1 |
| 9 | c2 | b2 | a3 |
| 17 | c2 | b3 | a5 |
| 25 | c2 | b4 | a7 |
| 2 | c1 | b1 | a1 |
| 10 | c1 | b2 | a3 |
| 18 | c2 | b3 | a5 |
| 26 | c2 | b4 | a7 |
| 3 | c1 | b1 | a1 |
| 11 | c1 | b2 | a3 |
| 19 | c2 | b3 | a5 |
| 27 | c2 | b4 | a7 |
| 4 | c1 | b1 | a1 |
| 12 | c1 | b2 | a3 |
| 20 | c2 | b3 | a5 |
| 28 | c2 | b4 | a7 |
| 5 | c1 | b1 | a2 |
| 13 | c1 | b2 | a4 |
| 21 | c2 | b3 | a6 |
| 29 | c2 | b4 | a8 |
| 6 | c1 | b1 | a2 |
| 14 | c1 | b2 | a4 |
| 22 | c2 | b3 | a6 |
| 30 | c2 | b4 | a8 |
| 7 | c1 | b1 | a2 |
| 15 | c1 | b2 | a4 |
| 23 | c2 | b3 | a6 |
| 31 | c2 | b4 | a8 |
| 8 | c1 | b1 | a2 |
| 16 | c1 | b2 | a4 |
| 24 | c2 | b3 | a6 |
| 32 | c2 | b4 | a8 |

301

Network device

Nested mapping unit 3011

Resource block
reconstruction unit 3012

Time-frequency mapping
unit 3013

FIG. 16

302　　　　　　　Network device

3023

Processor

3022

Transceiver

3021

Memory

3024
Bus

FIG. 17

401

User equipment

Receiving unit 4011

Extraction unit 4012

Demapping unit 4013

FIG. 18

402    User equipment

FIG. 19

**EP 3 592 074 B1**

**Patent documents cited in the description**

- US 20120063350 A1